# EUROPÄISCHE PATENTSCHRIFT

(11) **EP 0 284 787 B1**
(45) Veröffentlichungstag und Bekanntmachung des Hinweises auf die Patenterteilung: **30.03.1994**
(21) Anmeldenummer: 88102965.6
(22) Anmeldetag: 27.02.1988
(51) Int. Cl.: G06K 11/06

(54) **Weg- bzw. Positionsgeber**
Displacement and/or position indicator
Indicateur de déplacement et/ou de position

(30) Priorität: 28.03.1987 DE 3710286
(43) Veröffentlichungstag der Anmeldung: 05.10.1988
(73) Patentinhaber: Preh-Werke GmbH & Co. KG, 97616 Bad Neustadt (DE)
(72) Erfinder: Sachsse, Lothar, D-8521 Weisendorf (DE)

(56) Entgegenhaltungen:
- DE-A- 2 517 769
- DE-A- 3 428 250
- US-A- 3 772 629
- US-A- 4 651 123

## Beschreibung

Die Erfindung richtet sich auf einen Weg- bzw. Positionsgeber umfassend eine mit Spannungsanschlüssen versehene Widerstandsbahn, eine über der Widerstandsbahn im Abstand zu dieser gehaltene und gegen diese elastisch rückfedernd andrückbare Leiterfolie, sowie einen längs der Widerstandsbahn stellbaren Schieber als Weg- bzw. Positionstastglied, der die Leiterfolie örtlich gegen die Widerstandsbahn drückt.

Ein derartiger Weg- bzw. Positionsgeber ist aus der US-A-4 651 123 bekannt. Bei diesem als Stellwiderstand ausgestalteten Geber ist der Abstand zwischen der Leiterfolie und der Widerstandsbahn durch einen formstabilen Abstandsrahmen ausgebildet. Die Leiterfolie ist bei Druck von außen durch einen Schlitz des Abstandsrahmens hindurch mit der Widerstandsbahn zu kontaktieren. Dabei kann eine langzeitig ortsfeste Kontaktierung zu einer örtlichen Überdehnung der Leiterfolie insbesondere an den Schlitzkanten führen. Eine Überdehnung der Leiterfolie gefährdet die Kontakttrennung.

Weg- bzw. Positionsgeber sind in unterschiedlichen Ausführungsformen bekannt. Dabei ist der Schieber in der Regel mit einem Gleitkontakt versehen, welcher in direktem Kontakt mit einer Widerstandsbahn auf dieser entlanggleitet. Da für ein einwandfreies Funktionieren derartiger bekannter Einrichtungen eine unverschmutzte und unkontaminierte Oberfläche der Widerstandsbahn von wesentlicher Bedeutung ist, insbesondere für eine gute Reproduzierbarkeit, sind bei herkömmlichen Systemen die Leiterbahnen entweder in geschlossenen Gehäusen untergebracht, so daß bei linearen Systemen dann eine mit dem Schieber verbundene Schubstange in das Gehäuse geführt werden muß, oder es werden relativ aufwendige Abdeckmechanismen vorgesehen, um denjenigen Bereich der Widerstandsbahn abzudecken, wo sich der Schieber bewegen kann. Insoweit ist es z.B. bekannt, eine metallische Abdeckfolie vorzusehen, welche magnetisch angezogen wird und durch den Schieber oberhalb des Schleifkontaktes hindurchgeführt ist.

Derartige bekannte Systeme sind dementsprechend konstruktiv aufwendig und teuer in der Herstellung und eignen sich gleichwohl in der Regel nicht für den Einsatz in Bereichen, welche einer starken Verschmutzung oder einer Flüssigkeit ausgesetzt sind.

Hinzu kommt, daß direkt mit der Widerstandsbahn in Verbindung stehende Schleifkontakte schwingungsempfindlich sind, so daß sich beim Einsatz an schwingenden Maschinen oder in Fahrzeugen Abnutzungsprobleme ergeben, wie sie z.B. in der DE-AS 27 06 760 geschildert sind.

Derartige Abnutzungsprobleme werden bei optoelektronisch arbeitenden Positionsgebern vermieden, bei welchen aber andererseits wieder ein relativ großer konstruktiver Aufwand erforderlich ist, um Fremdlichteinfall zu vermeiden, und welche zur Signalverarbeitung einen gewissen elektronischen Aufwand benötigen.

Hiervon ausgehend liegt der Erfindung die Aufgabe zugrunde, einen Weg- bzw. Positionsgeber der eingangs genannten Art so auszgestalten, daß er bei einfachem und kostengünstigem Aufbau eine für viele Anwendungszwecke hinreichende Lebensdauer und Genauigkeit aufweist, wobei er insbesondere der Gefahr einer örtlichen Überdehnung der Leiterfolie entgegenwirken soll. Vor allem soll sich ein derartiger Positionsgeber eignen, um z.B. die Verstellbewegung und Position von elektromotorisch verstellbaren Teilen an Maschinen und Kraftfahrzeugen erfassen zu können.

Diese Aufgabe wird erfindungsgemäß dadurch gelöst, daß die Leiterfolie durch wenigstens eine Abstandshalter-Bahn aus elastischem Kunststoff elastisch auf Abstand gehalten wird.

Durch diese Ausgestaltung der Erfindung wird die Leiterfolie durch wenigstens eine Abstandhalter-Bahn aus elastischem Kunststoff auf Abstand gehalten. Solche Kunststoff-Zwischenschichten werden auch als Spacer bezeichnet. Sie unterstützen die Elastizität der Leiterfolie und sorgen mit ihrer eigenen Elastizität dafür, daß bei unbelasteter Leiterfolie stets ein geringer Abstand zwischen Widerstandsbahn und Leiterbahn und damit eine elektrische Trennung aufrechterhalten bleibt bzw. sich einstellt, so daß lediglich im Bereich des Schiebers ein definierter, kleinflächiger Kontakt hergestellt wird.

Durch die Ausgestaltung des vorgeschlagenen Weg- bzw. Positionsgebers wird jeglicher direkte, gleitende Kontakt zwischen Schieber und Widerstandsbahn vermieden, so daß Abnutzungserscheinungen nicht auftreten. Die erfindungsgemäß vorgesehene Leiterfolie, bei welcher es sich um eine Metallfolie oder um eine mit einer leitfähigen Beschichtung versehene Kunststoffolie handeln kann, dient gleichzeitig als absolut flüssigkeits- und staubdichte sowie schmutzresistente Abdeckung, so daß aufwendige konstruktive Maßnahmen für magnetisch haftende Abdeckungen, Gehäuse und dgl. entfallen und gleichzeitig eine Dichtheit des Systems bis zu Anforderungen gemäß IP 67 erzielt wird. Gleichzeitig ermöglicht die erfindungsgemäße Ausgestaltung einen flachen Aufbau bei geringem Gewicht mit einer unmittelbaren Befestigungsmöglichkeit direkt am jeweiligen zu erfassenden Meßobjekt. Die Fertigung kann aufgrund des einfachen konstruktiven Aufbaus weitestgehend automatisiert werden.

Die beschriebenen Leiterbahnen werden vorzugsweise zur Erzielung guter elektrischer Eigenschaften verwendet. Grundsätzlich ist es jedoch auch möglich, die elektrische Leitfähigkeit umgebender Gehäuseteile auszunutzen oder die Leiterfolie selbst so zu dimensionieren, daß diese allein eine ausreichende Leitfähigkeit gewährleistet.

Vorteilhafterweise ist vorgesehen, daß je eine Abstandhalter-Bahn und eine Leiterbahn beiderseits der Widerstandsbahn angeordnet sind. Durch diesen symmetrischen Aufbau wird ein zuverlässiger Kontakt mit den Leiterbahnen hergestellt.

Günstigerweise sind Leiterbahnen, Widerstandsbahnen und Abstandhalter-Bahnen auf einem isolierenden Tragekörper angeordnet, und die Außenkanten der Leiterfolie und des Tragekörpers werden von im Querschnitt U-förmigen Gehäuseteilen umgriffen, wobei die Oberseite der oberen U-Schenkel als Abstandhalter für den rollenden Schieber dienen.

Durch diese konstruktive Maßnahme wird einerseits eine definierte, abstandsgenaue und damit einen gleichbleibenden Andruck gewährleistende Bewegung des Schiebers und andererseits eine hermetische, gegen mechanische Beanspruchungen sichernde Abdichtung der Gesamtanordnung erzielt. Zur Erzielung eines mechanisch belastbaren und gleichzeitig dichten endseitigen Abschlusses kann vorgesehen sein, daß die Enden mit Kunststoff umspritzt oder umgossen werden.

Vorteilhafterweise weist der Schieber einen Druckkontakt in Form eines auf der Leiterfolie abrollenden Kunststoff-Rings, insbesondere eines Silikonrings, auf. Durch diese Ausbildung des Druckkontakts wird ein einwandfreies, verschleißfestes Gleiten auf der Leiterfolie ermöglicht, wobei ein derartiger Silikonring z.B. leicht auf einer eingestochenen Nut eines quer zur Längsrichtung verlaufenden, fingerartigen Teils des federnd angedrückten Schiebers befestigt werden kann.

Bei einer insbesondere als digitalem Weggeber geeigneten Ausführungsform ist vorgesehen, daß die Widerstandsbahn kammartige, quer zur Längsrichtung abstehende Zähne aufweist, wobei der Schieber die Leiterfolie nur längs des Zahnbereiches andrückt. Hierdurch wird bei einer Bewegung des Schiebers längs der Widerstandsbahn eine Folge von digitalen Spannungssignalen abgegeben, welche unmittelbar digital weiterverarbeitet werden können. Dabei kann die Widerstandsbahn eine solche im engeren Sinn des Wortes sein, wobei dann einerseits bei dem Verschieben ein digitales Bewegungssignal und andererseits in Abhängigkeit von der Spannungsteilerfunktion der Widerstandsbahn ein analoges Endlagesignal gewonnen werden können, wodurch sich völlig neuartige Anwendungsmöglichkeiten eröffnen.

Wird demgegenüber eine Widerstandsbahn mit sehr geringem Widerstand, d.h. letztlich ebenfalls eine Leiterbahn als Widerstandsbahn verwendet, kann mit rein digitaler Signalverarbeitung gearbeitet werden, wenn die Auswerteeinrichtung noch einen Speicher umfaßt.

Zur Erzielung eines Signal-Kriteriums für die jeweilige Bewegungsrichtung (vorwärts-rückwärts) ist vorgesehen, daß zwei elektrisch voneinander getrennte, kammartige Widerstandsbahnen ineinandergreifend angeordnet sind, daß jeder Widerstandsbahn eine gesonderte Leiterbahn zugeordnet ist, daß die Leiterfolie zwei voneinander isolierte Leiterbereiche umfaßt, und daß jedem Leiterbereich ein gesonderter Druckkontakt des Schiebers zugeordnet ist, wobei die Druckkontakte in Längsrichtung gegeneinander versetzt sind.

Eine weitere Ausführungsform mit kreisförmig angeordneten Widerstandsbahnen sieht vor, daß der Schieber an einer zentralen Drehachse angeordnet und die Drehachse mit einer den Schieber und die Leiter- bzw. Widerstandsbahnen übergreifenden federnden Abdeckung versehen ist. Hierdurch wird ein besonders kompakter und einfacher und mechanisch stabiler Aufbau erreicht.

Im Rahmen der Erfindung können die Widerstandsbahnen in an sich bekannter Weise aus leitfähigem Kunststoff bestehen. Dabei ist vorteilhafterweise vorgesehen, daß der Widerstand pro Länge der Widerstandsbahn durch entsprechende Reduktion der Breite gleichbleibend eingestellt ist. Dies bedeutet, daß herstellungstechnisch bedingte Abweichungen des längenspezifischen Widerstands längs der Widerstandsbahn dadurch korrigiert werden, daß die Breite der Widerstandsbahn entsprechend verändert oder eingeschnitten wird.

Die direkte Proportionalität zwischen dem längenspezifischen Widerstand und der Breite der Widerstandsbahn wird ausgenutzt bei einem Verfahren zur Herstellung einer Widerstandsbahn aus leitfähiger Kunststoff-Folie, wobei zur Erzielung eines gleichbleibenden Widerstandes pro Längeneinheit vorgesehen ist, daß der Widerstand pro Längeneinheit längs des Kunststoffbandes fortlaufend gemessen und zur Korrektur wenigstens eine Seitenkante durch eine in Abhängigkeit von dem gemessenen Widerstandswert gesteuerte keramische Schneideinrichtung abgetragen wird.

Durch das Vorsehen einer derartigen keramischen Schneideinrichtung, welche elektrisch nichtleitend ist, wird einerseits eine hohe und präzise Abtragung gewährleistet und andererseits die fortlaufende Widerstandsmessung nicht beeinträchtigt.

In völlig analoger Weise kann der spezifische Widerstand einer aufgedruckten Leiterbahn durch teilweises Abarbeiten mit Hilfe eines Lasers eingestellt werden.

Bei einer alternativen Ausführungsform des erfindungsgemäßen Weg- und Positionsgebers, bei welcher dieser als sogenanntes Grafik-Tablett zur Eingabe von Daten in eine Datenverarbeitungseinrichtung dient, ist vorgesehen, daß die Widerstandsbahn als zweidimensionales Widerstands-Bahnen-Netz ausgebildet ist, daß oderhalb derselben eine elastisch verspannte Leiterfolie angeordnet ist, und daß der Schieber als über dem Widerstands-Bahnen-Netz bewegliche, gegen die Leiterfolie andrückbare Abtasteinrichtung ausgebildet ist.

Eine derartige Anordnung ist gegenüber vergleichbaren Anordnungen außerordentlich kostengünstig herstellbar. Durch die vorgesehene Verspannung wird die Leiterfolie gegen das Widerstands-Bahnen-Netz elektrisch isoliert gehalten. Der Schieber kann bei dieser Ausführungsform im einfachsten Fall als eine Art Griffel ausgebildet sein, der gegen die Leiterfolie gedrückt wird, so daß hierdurch ein punktförmiger Kontakt hergestellt wird.

Weitere Merkmale, Vorteile und Einzelheiten der Erfindung ergeben sich aus der folgenden Beschreibung einer bevorzugten Ausführungsform anhand der Zeichnung. Dabei zeigen
- Fig. 1: einen Schnitt durch eine erste Ausführungsform eines erfindungsgemäßen Weg- bzw. Positionsgebers,
- Fig. 2: einen schematische Aufsicht auf eine zweite Ausführungsform ohne Leiterfolie bzw. mit Leiterfolie,
- Fig. 3: einen Schnitt durch eine dritte Ausführungsform,
- Fig. 4: eine Aufsicht auf die Leiter- bzw. Widerstandsbahnen bei der Ausführungsform gemäß Fig. 3 und
- Fig. 5: eine Darstellung einer widerstandskorrigierten Widerstandsbahn aus leitfähigem Kunststoff.

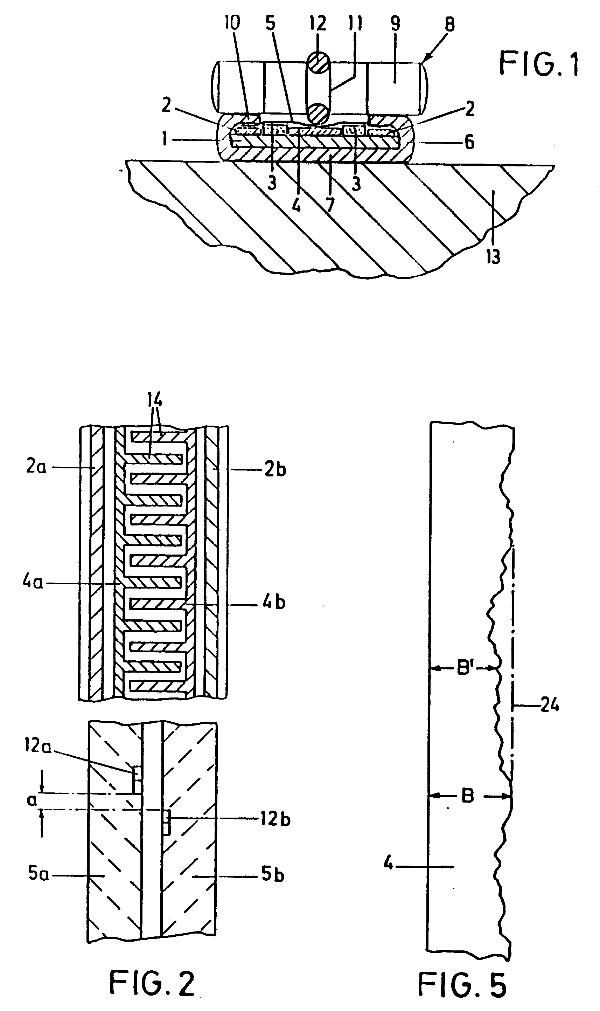

Bei der in Fig. 1 dargestellten Ausführungsform sind auf einem Tragekörper 1 von links nach rechts in Fig. 1 längsverlaufend nebeneinander angeordnet eine Leiterbahn 2, eine Abstandhalter-Bahn 3, eine Widerstandsbahn 4, eine weitere Abstandhalter-Bahn 3 und eine weitere Leiterbahn 2. Oberhalb dieser Bahnen erstreckt sich über diese eine Leiterfolie 5, welche an den Leiterbahnen 2 anliegt und dementsprechend mit diesen elektrisch verbunden ist und welche durch die Abstandhalter-Bahnen 3 im Grundzustand im Abstand zu der Widerstandsbahn 4 gehalten wird, d.h. die Höhe der Abstandhalter-Bahnen 3 ist etwas größer als die Höhe der Widerstandsbahn 4.

Im Querschnitt U-förmige Gehäuseteile 6, welche an der Unterseite durch eine Grundplatte 7 verbunden sind, umschließen den Grundkörper 1 und die Leiterfolie 5 sowie die beiden äußeren Leiterbahnen 2 elektrisch isoliert von diesen.

Ein Schieber 8 ist oberhalb der senkrecht zur Zeichenebene in Fig. 1 längsverlaufenden Widerstandsbahn 4 bzw. Leiterbahnen 2 längsverschiebbar angeordnet, wobei ein querverlaufendes Fingerteil 9 auf der Oberseite der oberen U-Schenkel 1o der Gehäusetile 6 abrollend und mit definiertem Abstand zur Leiterfolie 5 federnd angedrückt wird. Das Fingerteil 9 ist mit einer Ringnut 11 versehen, welche zur Aufnahme eines Andruckringes 12 in Form eines Silikonrings dient. Durch diesen auf ihr abrollenden Silikonring wird die Leiterfolie 5 punktförmig an die Widerstandsbahn 4 gedrückt.

Die Widerstandsbahn 4 ist an ihren Enden mit im einzelnen nicht dargestellten Spannungsanschlüssen versehen. Ein weiterer Spannungsanschluß ist mit den Leiterbahnen 2 verbunden, welche zur Erhöhung der Zuverlässigkeit des Systems aufgrund des symmetrischen Aufbaus auch untereinander verbunden sind. Durch den Andruckring 12 wird dementsprechend ein variabler Mittelabgriff des Spannungsteilersystems geschaffen, indem über die Leiterfolie 5 ein elektrischer Kontakt zwischen einem definierten Punkt längs der Widerstandsbahn 4 und den Leiterbahnen 2 hergestellt wird. Dementsprechend ist die zwischen den Leiterbahnen 2 und einem Ende der Widerstandsbahn 4 abgegriffene Spannung im Verhältnis zur anliegenden Gesamtspannung direkt proportional dem Abstand zwischen dem Druckkontakt 12 und dem Ende dieser Leiterbahn im Verhältnis zur gesamten Verfahrlänge des Wegegebers.

Die in Fig. 1 dargestellte Anordnung kann direkt im Bereich des zu vermessenden Objekts, insbesondere eines Kraftfahrzeugsitzes angeordnet werden. Dabei kann das System z.B. an dem Kraftfahrzeugboden 13 befestigt werden, wobei das Fingerteil 9 des Schiebers direkt mit dem Kraftfahrzeugsitz, der elektromotorisch längsverschiebbar gelagert ist, verbunden werden kann.

Bei der in Fig. 2 schematisch dargestellten Ausführungsform sind zwei voneinander getrennte Widerstandsbahnen 4a und 4b vorgesehen, welche jeweils eine Mehrzahl äquidistanter, zur Längserstreckung senkrechter Zähne 14 aufweisen. Die Leiterbahnen 2 sind als zwei elektrisch getrennte Leiterbahnen 2a und 2b ausgebildet. Auch die abdeckende Leiterfolie 5 ist elektrisch getrennt in Leiterfolienbereiche 5a und Leiterfolienbereiche 5b. Der Schieber 8 umfaßt zwei Druckrollen 12a und 12b, welche in einem Abstand a voneinander angeordnet sind und jeweils einer der längsgeteilten Leiterfolienbereiche 5a und 5b zugeordnet sind.

Durch diese Ausgestaltung wird beim Längsverschieben des Schiebers 8 eine Folge von Spannungsimpulsen abwechselnd über die Widerstandsbahn 4a, den Leiterfolienbereich 5a und die Leiterbahn 2a und andererseits die Widerstandsbahn 4b, den Leiterfolienbereich 5b und die Leiterbahn 2b abgegeben.

Durch eine elektronische Auswerteeinrichtung kann aus diesen Signalen bzw. der Signalfolge ein Bewegungsrichtungs-Signal gewonnen werden.

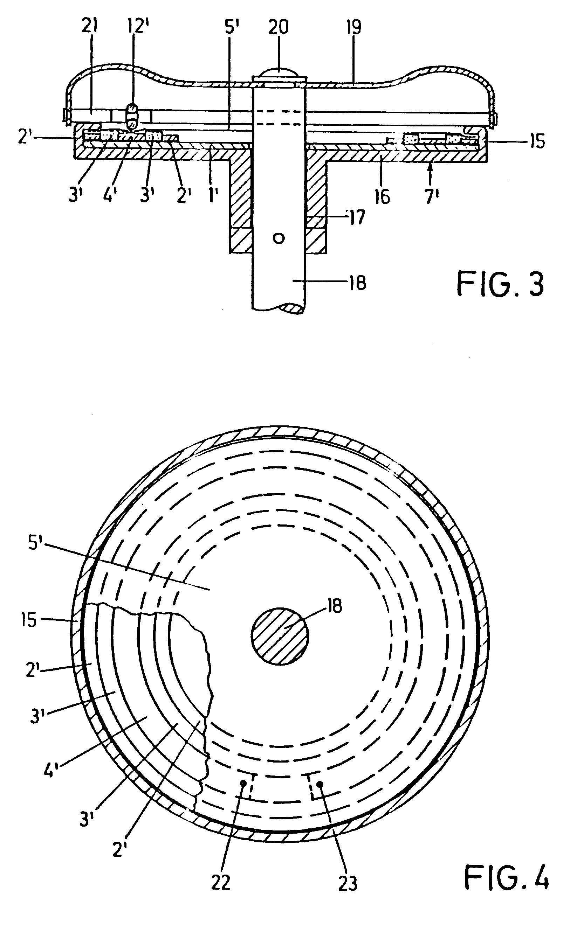

In Fig. 3 und 4 ist eine Ausführungsform als Drehwinkelgeber dargestellt. Eine Grundplatte 1ʹ aus Epoxyharz oder Hartpappe trägt kreisförmig von außen nach innen konzentrisch zueinander angeordnet eine äußere Leiterbahn 2ʹ, eine Abstandhalter-Bahn 3ʹ, eine Widerstandsbahn 4ʹ eine weitere Abstandhalter-Bahn 3ʹ und eine innere Leiterbahn 2ʹ. Diese sind durch eine kreisscheibenförmige Leiterfolie 5ʹ abgedeckt. Ein Gehäuse 7ʹ weist einen umbördelten Rand 15 auf, der die Leiterfolie 5ʹ übergreift. In der Grundplatte 16 ist eine zentrale Bohrung 17 vorgesehen, durch welche eine Welle 18 geführt ist, deren Drehwinkelstellung erfaßt werden soll. Am Ende der Welle 18 ist eine Abdeckung 19 vorgesehen, welche das Gehäuse 7ʹ übergreift und mit der Welle 18 mittels einer Schraube 2o verschraubt ist. An einer drehbar gelagerten Querstrebe 21 der federnden Abdeckung 19 ist ein Druckkontakt 12ʹ mittels einer Ringnut festgelegt, der auf die Leiterfolie 5ʹ drückt und auf diese Weise einen Punktkontakt zu der Widerstandsbahn 4ʹ herstellt. An den Enden der Widerstandsbahn 4ʹ sind Spannungsanschlüsse 22, 23 vorgesehen.

In Fig. 5 ist schematisch ein als Widerstandsbahn 4 geeignetes Kunststoffband dargestellt. Dieses Kunststoffband kann aufgrund von Inhomogenitäten in der Zusammensetzung und herstellungsbedingten Dickenschwankungen längs des Bandes unterschiedliche Widerstände pro Längeneinheit aufweisen. Dies wird erfindungsgemäß dadurch kompensiert, daß durch eine Meßeinrichtung der Widerstand pro Längeneinheit laufend gemessen und nachfolgend durch eine Abtrageinrichtung wenigstens eine Kante 24 proportional zu einem lokal gegebenenfalls reduzierten Widerstand von der ursprünglichen Breite B auf eine lokal wechselnde reduzierte Breite Bʹ mittels eines Keramik-Schneidmessers abgetragen wird, welches selbst nichtleitend ist und dementsprechend die Leitfähigkeitsmessungen nicht beeinträchtigt.

## Patentansprüche

1. Weg- bzw. Positionsgeber umfassend eine mit Spannungsanschlüssen versehene Widerstandsbahn (4), eine über der Widerstandsbahn (4) im Abstand zu dieser gehaltene und gegen diese elastisch rückfedernd andrückbare Leiterfolie (5) sowie einen längs der Widerstandsbahn (4) stellbaren Schieber (8) als Weg- bzw. Posititonsglied, der die Leiterfolie (5) örtlich gegen die Widerstandsbahn (4) drückt,
dadurch gekennzeichnet,
daß die Leiterfolie (5) durch wenigstens eine Abstandshalter-Bahn (3) aus elastischem Kunststoff elastisch auf Abstand gehalten wird.

2. Weg- bzw. Positionsgeber, nach Anspruch 1,
dadurch gekennzeichnet,
daß die Leiterfolie (5) mit einer parallel zu der Widerstandsbahn (4) im Abstand zu dieser und elastisch von dieser getrennt verlaufenden Leiterbahn (2) elektrisch verbunden ist.

3. Weg- bzw. Positionsgeber nach Anspruch 2,
dadurch gekennzeichnet,
daß je eine Abstandhalter-Bahn (3) und eine Leiterbahn (2) beiderseits der Widerstandsbahn (4) angeordnet sind.

4. Weg- bzw. Positionsgeber nach Anspruch 2 oder 3,
dadurch gekennzeichnet,
daß Leiterbahnen (2), Widerstandsbahn (4) und Abstandhalter-Bahnen (3) auf einem isolierenden Tragekörper (1) angeordnet sind, und die Außenkanten der Leiterfolie (5) und des Tragekörpers (1) von im Querschnitt U-förmigen Gehäuseteilen (6) umgriffen werden, wobei die Oberseite der oberen U-Schenkel (10) als Führungsbahn und Abstandshalterung für den Schieber (8) dient.

5. Weg- bzw. Positionsgeber nach einem der Ansprüche 1 bis 4,
dadurch gekennzeichnet,
daß der Schieber (8) einen Druckkontakt (12) in Form eines auf der Leiterfolie abrollenden Kunststoff-Rings, insbesondere Silikonrings, aufweist.

6. Weg- bzw. Positionsgeber nach einem der Ansprüche 1 bis 5,
dadurch gekennzeichnet,
daß die Widerstandsbahn (4a, 4b) kammartig quer zur Längsrichtung abstehende Zähne (14) aufweist, wobei der Schieber (8) die Leiterfolie nur längs des Zahnbereiches andrückt.

7. Weg- bzw. Positionsgeber nach Anspruch 6,
dadurch gekennzeichnet,
daß zwei elektrisch voneinander getrennte, kammartige Widerstandsbahnen (4a, 4b) ineinandergreifend angeordnet sind, daß jeder Widerstandsbahn (4a, 4b) eine gesonderte Leiterbahn (2a, 2b) zugeordnet ist, daß die Leiterfolie (5) zwei voneinander isolierte Leiterbereiche (5a, 5b) umfaßt, und daß jedem Leiterbereich (5a, 5b) ein gesonderter Druckkontakt (12a, 12b) des Schiebers (8) zugeordnet ist, wobei die Druckkontakte (12a, 12b) in Längsrichtung gegeneinander versetzt sind.

8. Weg- bzw. Positionsgeber nach Anspruch 1 oder 2,
wobei die Widerstandsbahn(en) (4') kreisförmig angeordnet ist (sind),
dadurch gekennzeichnet,
daß der Druckkontakt (12') um eine zentrale Welle (18) schwenkbar angeordnet ist und die Welle (18) mit einer den Druckkontakt (12') und die Leiter- bzw. Widerstandsbahnen (2', 4') übergreifenden, federnden Abdeckung (19) versehen ist.

9. Weg- bzw. Positionsgeber nach einem der Ansprüche 1 bis 8,
dadurch gekennzeichnet,
daß die Widerstandsbahn (4, 4') aus leitfähigem Kunststoff besteht.

10. Weg- bzw. Positionsgeber nach Anspruch 9,
dadurch gekennzeichnet,
daß der Widerstand pro Länge der Widerstandsbahn (4, 4') durch entsprechende Reduktion der Breite (B) gleichbleibend eingestellt ist.

11. Weg- bzw. Positionsgeber nach Anspruch 1,
dadurch gekennzeichnet,
daß die Widerstandsbahn als zweidimensionales Widerstands-Bahnen-Netz ausgestaltet ist, daß oberhalb derselben eine elastisch verspannte Leiterfolie angeordnet ist, und daß der Schieber als über dem Widerstands-Bahnen-Netz bewegliche, gegen die Leiterfolie andrückbare Abtasteinrichtung ausgebildet ist.

## Claims

1. Displacement and position indicator including a resistance path (4), a conductor foil (5) which is supported over the resistance path (4) spaced apart from it and which can be pressed against with elastic restoration, and a slider (8) which can be placed along the resistance path (4) as a displacement and position member which presses the conductor foil (5) locally against the resistance path (4), characterised in that the conductor foil (5) is held resiliently at a distance by at least one spacer path (3) of resilient plastics.

2. Displacement and position indicator according to claim 1, characterised in that the conductor foil (5) is electrically connected to a conductor path (2) extending parallel to the resistance path (4) spaced apart from it and resiliently separated from it.

3. Displacement and position indicator according to claim 2, characterised in that a spacer path (3) and a conductor path (2) are arranged on both sides of the resistance path (4).

4. Displacement and position indicator according to claim 2 or 3, characterised in that conductor paths (2), resistance path (4) and spacer paths (3) are arranged on an insulating carrier body (1), and the outer edges of the conductor foil (5) and of the carrier body (1) are gripped by housing portions (6) which are U-shaped in cross section, the upper side of the upper U-arms (10) being used as guide path and spacer for the slider (8).

5. Displacement and position indicator according to one of claims 1 to 4, characterised in that the slider (8) has a pressure contact (12) in the form of a plastics ring, in particular a silicone ring, rolling on the conductor foil.

6. Displacement and position indicator according to one of claims 1 to 5, characterised in that the resistance path (4a, 4b) has teeth (14) which protrude like a comb transversely to the longitudinal direction, the slider (8) pressing the conductor foil only along the tooth area.

7. Displacement and position indicator according to claim 6, characterised in that two comb-like resistance paths (4a, 4b), electrically separate from each other, are arranged to engage in each other, in that a separate conductor path (2a, 2b) is associated with each resistance path (4a, 4b), in that the conductor foil (5) includes two conductor regions (5a, 5b) insulated from each other, and in that a separate pressure contact (12a, 12b) of the slider (8) is assigned to each conductor region (5a, 5b), the pressure contacts (12a, 12b) being offset with respect to each other in the longitudinal direction.

8. Displacement and position indicator according to claim 1 or 2, in which the resistance path(s) (4') is/are arranged in a circle, characterised in that the pressure contact (12') is pivotably arranged about a central shaft (18) and the shaft (18) is provided with a resilient cover (19) extending over the pressure contact (12') and the conductor and resistance paths (2', 4').

9. Displacement or position indicator according to one of claims 1 to 8, characterised in that the resistance path (4, 4') is made of conductive plastics.

10. Displacement and position indicator according to claim 9, characterised in that the resistance per unit length of the resistance path (4, 4') is set to be constant by appropriate reduction of the width (B).

11. Displacement and position indicator according to claim 1, characterised in that the resistance path is designed as a two-dimensional resistance-paths-system, in that a resiliently tensioned conductor foil is arranged above it, and in that the slider is designed as a probe device which is movable over the resistance-paths-system and can be pressed against the conductor foil.

## Revendications

1. Indicateur de déplacement et/ou de position comprenant une piste résistante (4) munie de bornes de branchement électrique, une feuille mince conductrice (5) maintenue au-dessus de la piste résistante (4) avec un écart par rapport à celle-ci et pouvant être poussée élastiquement contre celle-ci avec effet de rappel, ainsi qu'un curseur (8) qui est susceptible d'être placé le long de la piste résistante (4) en tant qu'élément de déplacement et/ou de position, et qui pousse la feuille mince conductrice (5) localement contre la piste résistante (4),
caractérisé en ce que
la feuille mince conductrice (5) est maintenue élastiquement à l'écart par au moins une piste (3) de maintien de distance d'écartement qui est réalisée en un matériau élastique de synthèse.

2. Indicateur de déplacement et/ou de position selon la revendication 1,
caractérisé en ce que
la feuille mince conductrice (5) est connectée électriquement à une piste conductrice (2) qui s'étend parallèlement à la piste résistante (4), avec un écart par rapport à celle-ci et en étant séparée élastiquement de celle-ci.

3. Indicateur de déplacement et/ou de position selon la revendication 2,
caractérisé en ce que
de chaque côté de la piste résistante (4) sont disposées une piste (3) de maintien de distance de l'écartement et une piste conductrice (2).

4. Indicateur de déplacement et/ou de position selon la revendication 2 ou 3,
caractérisé en ce que
des pistes conductrices (2), une piste résistante (4) et des pistes (3) de maintien de distance d'écartement sont disposées sur un corps porteur (1) isolant, et en ce que les bords extérieurs de la feuille mince conductrice (5) et du corps porteur (1) sont entourés par des parties (6) du corps ayant une forme de U, vues en section transversale, la face supérieure des branches supérieures (10) de l'U servant de piste de guidage et d'élément de maintien de distance d'écartement pour le curseur (8).

5. Indicateur de déplacement et/ou de position selon l'une des revendications 1 à 4,
caractérisé en ce que
le curseur (8) comporte un contact presseur (12) se présentant sous la forme d'un anneau en matière de synthèse, en particulier un anneau en silicone roulant sur la feuille mince conductrice.

6. Indicateur de déplacement et/ou de position selon l'une des revendications 1 à 5,
caractérisé en ce que
la piste résistante (4a, 4b) présente des dents (14) qui font saillie transversalement au sens longitudinal à la manière de celles d'un peigne, le curseur (8) n'appuyant sur la feuille mince conductrice que le long de la zone des dents.

7. Indicateur de déplacement et/ou de position selon la revendication 6
caractérisé en ce que
deux pistes résistantes (4a, 4b), électriquement séparées l'une de l'autre, en forme de peigne, sont disposées de façon à être imbriquées l'une avec l'autre; en ce que chaque piste résistante (4a, 4b) est associée à une piste conductrice (2a, 2b) séparée, en ce que la feuille mince conductrice (5) comprend deux zones conductrices (5a, 5b) électriquement isolées l'une de l'autre et qu'à chaque zone conductrice (5a, 5b) est associé un contact presseur séparé (12a, 12b) du curseur (8), les contacts presseurs (12a, 12b) étant décalés l'un par rapport à l'autre dans le sens longitudinal.

8. Indicateur de déplacement et/ou de position selon la revendication 1 ou 2, dans lequel
la piste résistante (les pistes résistantes) est (sont) disposée(s) en cercle,
caractérisé en ce que
le contact presseur (12') est monté pivotant sur un arbre central (18), et en ce que l'arbre (18) est muni d'un capotage (19) doté d'un effet de ressort, entourant les pistes conductrices et les pistes résistantes (2', 4').

9. Indicateur de déplacement et/ou de position selon les revendications 1 à 8,
caractérisé en ce que
la piste résistante (4, 4') est constituée par un matériau de synthèse conducteur.

10. Indicateur de déplacement et/ou de position selon la revendication 9,
caractérisé en ce que
la résistance de la piste résistante (4, 4') en fonction de sa longueur est réglée de manière à rester constante grâce à une réduction correspondante de la largeur (B).

11. Indicateur de déplacement et/ou de position selon la revendication 1,
caractérisé en ce que
la piste résistante a une configuration de réseau de pistes résistantes à deux dimensions, en ce qu'au-dessus de celles-ci est disposée une feuille mince conductrice tendue élastiquement et en en ce que le curseur a une conformation de dispositif capteur mobile au-dessus du réseau de pistes résistantes et susceptible d'être appuyé contre la feuille mince conductrice.
